# EUROPEAN PATENT APPLICATION

(11) **EP 4 610 085 A1**
(43) Date of publication of application: **03.09.2025**
(21) Application number: 25151797.5
(22) Date of filing: 14.01.2025
(51) Int. Cl.: B60L 3/00, B60L 3/04, B60L 53/22

(54) **VEHICLE**

(30) Priority: 09.02.2024 JP 2024018871
(71) Applicant: TOYOTA JIDOSHA KABUSHIKI KAISHA, Aichi-ken, 471-8571 (JP)
(72) Inventor: YAMANAKA, Noriyuki, Toyota-shi, 471-8571 (JP)
(74) Representative: Kuhnen & Wacker Patent- und Rechtsanwaltsbüro PartG mbB

(57) **Abstract**

A vehicle (10) includes: a motor (20); a battery (16) that is connected to the motor (20) through a system main relay (48); a first unit (24) that is connected to the battery through the system main relay (48); and a second unit (42) that is disposed adjacent to the first unit (24) on a first side in a vehicle front-rear direction. The first unit (24) includes: an isolation transformer (30) including a primary coil (30a) and a secondary coil (30b); a first electric circuit (32) that is connected to the primary coil (30a); and a second electric circuit (34) that is connected to the secondary coil (30b). The first electric circuit (32) is connected to the battery (16). The first electric circuit (32) is located closer to a second side in the vehicle front-rear direction than the isolation transformer (30).

## Description

### BACKGROUND OF THE INVENTION

### 1. Field of the Invention

The present disclosure relates to a vehicle.

### 2. Description of Related Art

Japanese Unexamined Patent Application Publication No. 2022-185687 describes a vehicle including a charging unit. The charging unit is disposed in a front compartment of a vehicle body and incorporates a charger that charges a battery by using an external alternating-current electric power supply.

A bi-directional charger has been known as a charger that is mounted on a vehicle. The bi-directional charger does not only function as a charger that charges a battery, but also functions as an electric power converter that supplies electric power from the battery to an electric power supply outlet provided to the vehicle. It is usually desired that the electric power supply outlet is usable even while the vehicle is traveling. The bi-directional charger is therefore electrically connected to the battery not only while the battery is being charged, but also while the vehicle is traveling.

In a case where the vehicle has a collision, another adjacent unit may come into contact with the charging unit that incorporates the bi-directional charger. At this time, a casing of the charging unit can also be damaged. Here, a high voltage from the battery may be applied to the bi-directional charger while the vehicle is traveling. It is thus desirable to reduce the influence on the portion to which the high voltage is applied even if the casing of the charging unit is damaged.

This is not limited to the charging unit that incorporates the bi-directional charger. The same applies to a unit that is electrically connected to the battery even while the vehicle is traveling.

### SUMMARY OF THE INVENTION

According to an aspect of the present disclosure, a vehicle includes: a vehicle body; wheels that supports the vehicle body; a motor configured to drive at least one of the wheels; a battery that is connected to the motor through a system main relay; a first unit that is connected to the battery through the system main relay; and a second unit that is disposed adjacent to the first unit on a first side in the vehicle front-rear direction. The first unit includes: a casing; an isolation transformer; a first electric circuit; and a second electric circuit. The isolation transformer is disposed in the casing. The isolation transformer includes a primary coil and a secondary coil. The first electric circuit is disposed in the casing. The first electric circuit is electrically connected to the primary coil of the isolation transformer. The first electric circuit is electrically connected to the battery. The second electric circuit is disposed in the casing. The second electric circuit is electrically connected to the secondary coil of the isolation transformer. The first electric circuit is located closer to a second side in the vehicle front-rear direction than the isolation transformer in the casing.

In the vehicle described above, the system main relay is closed and the motor is electrically connected to the battery when the vehicle travels. When the system main relay is closed, the first unit is also electrically connected to the battery. That is, while the vehicle is traveling, the first unit is also connected to the battery through the system main relay. As a result, a high voltage from the battery is applied to the first electric circuit of the first unit. Meanwhile, the second unit is disposed adjacent to the first unit on the first side in the vehicle front-rear direction. Thus, for example, when the vehicle has a collision, the first unit and the second unit come into contact and the casing of the first unit may be hereby damaged. The first electric circuit is, however, located closer to the second side in the vehicle front-rear direction than the isolation transformer in the casing. That is, the first electric circuit is disposed at a position apart from the second unit in the casing. Thus, even in a case where the contact between the first unit and the second unit damages the casing of the first unit, the first electric circuit to which the high voltage from the battery is applied is prevented or restrained from being exposed to the outside of the casing.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically illustrating a configuration of a vehicle;
FIG. 2 is a plan view schematically illustrating an internal configuration of a major part of the vehicle;
FIG. 3 is a block diagram illustrating the configuration of the vehicle;
FIG. 4 is a sectional view schematically illustrating an internal configuration of a charging unit; and
FIG. 5 illustrates an electric circuit diagram of the charging unit.

### DETAILED DESCRIPTION OF EMBODIMENTS

A vehicle includes: a vehicle body; a plurality of wheels that supports the vehicle body; a motor configured to drive at least one of the wheels; a battery that is connected to the motor through a system main relay; a first unit that is connected to the battery through the system main relay; and a second unit that is disposed adjacent to the first unit on a first side (e.g., rear side) in the vehicle front-rear direction. The first unit includes: a casing; an isolation transformer; a first electric circuit; and a second electric circuit. The isolation transformer is disposed in the casing. The isolation transformer includes a primary coil and a secondary coil. The first electric circuit is disposed in the casing. The first electric circuit is electrically connected to the primary coil of the isolation transformer. The first electric circuit is electrically connected to the battery. The second electric circuit is disposed in the casing. The second electric circuit is electrically connected to the secondary coil of the isolation transformer. The first electric circuit is located closer to a second side (e.g., front side) in the vehicle front-rear direction than the isolation transformer in the casing.

The vehicle may further include an electric power supply outlet configured to cause an electric device to be attached and detached to and from the electric power supply outlet. The electric power supply outlet is electrically connected to the second electric circuit of the first unit. In the case, the isolation transformer, the first electric circuit, and the second electric circuit in the first unit may be included in an electric power converter configured to convert direct-current electric power supplied from the battery to alternating-current electric power that is supplied to the electric power supply outlet. According to such a configuration, the first unit is electrically connected to the battery and it is possible for the first unit to supply electric power from the battery to the electric power supply outlet while the vehicle is traveling.

The first electric circuit may include a first electric power conversion circuit configured to convert the direct-current electric power supplied from the battery to high-frequency alternating-current electric power that is input to the isolation transformer. In the case, the second electric circuit may include: a second electric power conversion circuit configured to convert the high-frequency alternating-current electric power output from the isolation transformer to direct-current electric power; and a third electric power conversion circuit configured to convert the direct-current electric power output from the second electric power conversion circuit to the alternating-current electric power that is supplied to the electric power supply outlet.

The vehicle may further include a charging inlet configured to cause an external alternating-current electric power supply to be attached and detached to and from the charging inlet. The charging inlet is electrically connected to the second electric circuit of the first unit. The isolation transformer, the first electric circuit, and the second electric circuit in the first unit may be included in a bi-directional charger configured to convert alternating-current electric power supplied from the external alternating-current electric power supply to direct-current electric power with which the battery is charged.

The third electric power conversion circuit of the second electric circuit may be configured to convert the alternating-current electric power supplied from the external alternating-current electric power supply to direct-current electric power. The second electric power conversion circuit of the second electric circuit may be configured to convert the direct-current electric power output from the third electric power conversion circuit to high-frequency alternating-current electric power that is input to the isolation transformer. The first electric power conversion circuit of the first electric circuit may be configured to convert the high-frequency alternating-current electric power output from the isolation transformer to the direct-current electric power with which the battery is charged.

The second unit may include a housing made of metal. The housing made of metal has relatively high rigidity. The presence of the housing having high rigidity in the second unit increases the possibility that the casing of the first unit is damaged when the first unit and the second unit come into contact. Adopting the present technology, however, prevents or restrains the first electric circuit to which a high voltage from the battery is applied from being exposed to the outside of the casing. It is to be noted that the metal included in the second unit may be an aluminum-based metal or a steel-based metal that is, however, merely an example.

The second unit may include a hydraulic device including a brake master cylinder. In the case, the housing may be a part of the hydraulic device. The housing of the hydraulic device of a brake system is required to have high rigidity. Thus, when the first unit and the second unit come into contact, the possibility further increases that the casing of the first unit is damaged. Adopting the present technology, however, prevents or restrains the first electric circuit to which a high voltage from the battery is applied from being exposed to the outside of the casing.

The second unit may be disposed to be offset to a first side (e.g., left side) in the vehicle left-right direction with respect to the first unit. In the case, the side surface of the housing on a second side (e.g., right side) in the vehicle left-right direction may be provided with a recess in the area close to the first unit. According to such a configuration, it is possible to increase the interval between the first unit and the second unit. The first unit and the second unit are thus prevented or restrained from coming into contact and damage to the casing of the first unit due to the contact is prevented or restrained.

The vehicle body may include a cabin and a front compartment that is located in the front direction of the cabin. In the case, the first unit and the second unit may be disposed in the front compartment.

The vehicle may further include a power controller that controls supply electric power between the battery and the motor. In the case, the first unit and the second unit may be disposed above the power controller.

The vehicle may further include an engine that is disposed in a front compartment. The vehicle may be a plug-in hybrid electric vehicle (PHEV). When the engine is present further in the front compartment, the front compartment has limited redundant space. The first unit and the second unit may be disposed closer to each other. Thus, the first unit and the second unit come into contact and the possibility further increases that the casing of the first unit is damaged. Adopting the present technology, however, prevents or restrains the first electric circuit to which a high voltage from the battery is applied from being exposed to the outside of the casing.

The casing of the first unit may include a first connector port, a second connector port, and a third connector port. In the case, the first connector port may be configured to cause a first connector of a first cable to be attached and detached to and from the first connector port. The first cable is electrically connected to the battery. The second connector port may be configured to cause a second connector of a second cable to be attached and detached to and from the second connector port. The second cable is electrically connected to an electric power supply outlet. The third connector port may be configured to cause a third connector of a third cable to be attached and detached to and from the third connector port. The third cable is electrically connected to a charging inlet. The first connector port may be then located closer to the second side in the vehicle front-rear direction than the second connector port and the third connector port. According to such a configuration, it is possible to prevent or restrain the first connector electrically connected to the battery from being damaged by the second unit when the vehicle has a collision.

The first electric circuit may be located closer to the second side (e.g., front side) in the vehicle front-rear direction than the central position of the first unit in the vehicle front-rear direction. According to such a configuration, the first electric circuit is disposed at a position farther from the second unit in the casing.

The first side in the vehicle front-rear direction may be the rear side in the vehicle front-rear direction. The second side in the vehicle front-rear direction may be the front side in the vehicle front-rear direction.

Typical and non-limiting specific examples of the present disclosure will be described in detail below with reference to the drawings. The detailed description of the typical and non-limiting specific examples of the present disclosure simply intends to show details for carrying out the examples of the present disclosure to those skilled in the art and does not intend to limit the scope of the present disclosure. In addition, it is possible to use the additional features disclosed below and the disclosure separately from or along with other features and the disclosure to provide a further improved vehicle.

In addition, a combination of features and steps disclosed in the following detailed description is not essential to carry out the present disclosure in the widest terms. The combination is demonstrated only to describe a typical specific example of the present disclosure in particular. Furthermore, the various features of the typical specific examples described above and below and the various features of what are described in the independent and dependent claims do not have to be combined in accordance with the specific examples described herein or in the order of a list to provide an additional and useful embodiment of the present disclosure.

All the features described in the present specification and/or the claims intend to be disclosed individually and independently as limiting the disclosure as originally filed and the claimed specifying matters separately from the configurations of the features described in the embodiment and/or the claims. Furthermore, all the descriptions regarding the numerical ranges and the groups or the sets intend to disclose, as limiting the disclosure as originally filed and the claimed specifying matters, the intermediate configurations.

A vehicle 10 according to an embodiment will be described with reference to the drawings. The vehicle 10 according to the present embodiment is a plug-in hybrid electric vehicle (PHEV). The vehicle 10 is not, however, limited to a plug-in hybrid electric vehicle. The vehicle 10 may be another type of electrified vehicle such as a battery electric vehicle (BEV) or a hybrid electric vehicle (HEV).

Here, a direction FR in the drawings refers to the front direction of the vehicle front-rear direction and a direction RR refers to the rear direction of the vehicle front-rear direction. In addition, a direction LH refers to the left direction of the vehicle left-right direction (or the width direction) and a direction RH refers to the right direction of the vehicle left-right direction. A direction UP then refers to the up direction of the vehicle-height direction and a direction DW refers to the down direction of the vehicle-height direction. In the present specification, the front side in the vehicle front-rear direction, the rear side in the vehicle front-rear direction, the left side in the vehicle left-right direction, the right side in the vehicle left-right direction, the up side in the vehicle-height direction, and the down side in the vehicle-height direction are sometimes referred to simply as the front side, the rear side, the left side, the right side, the up side, and the down side, respectively.

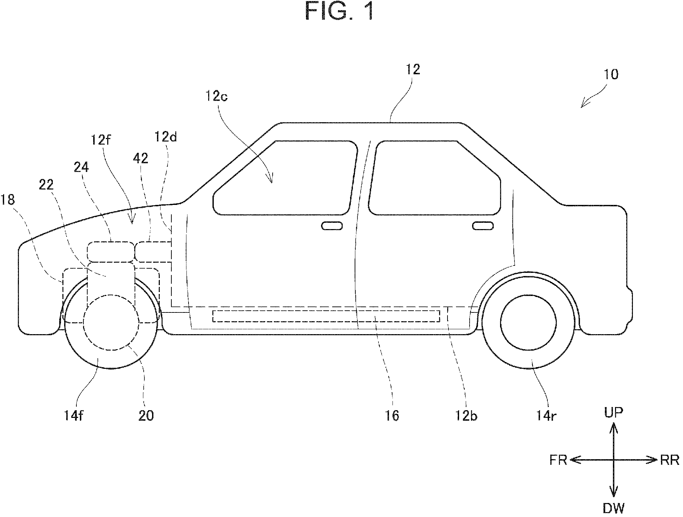

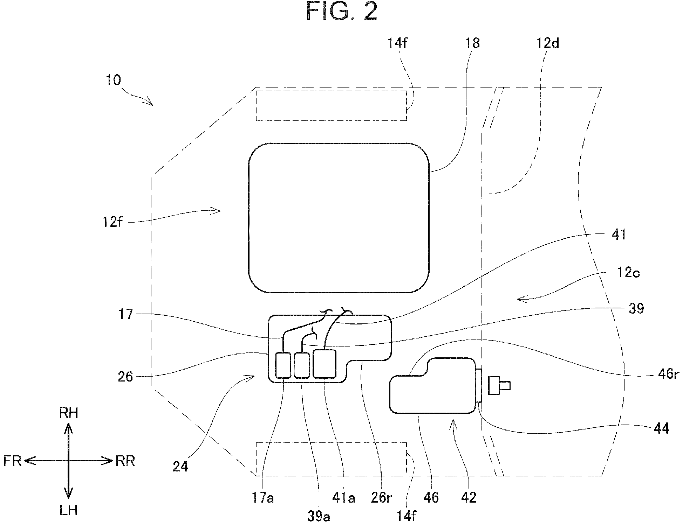

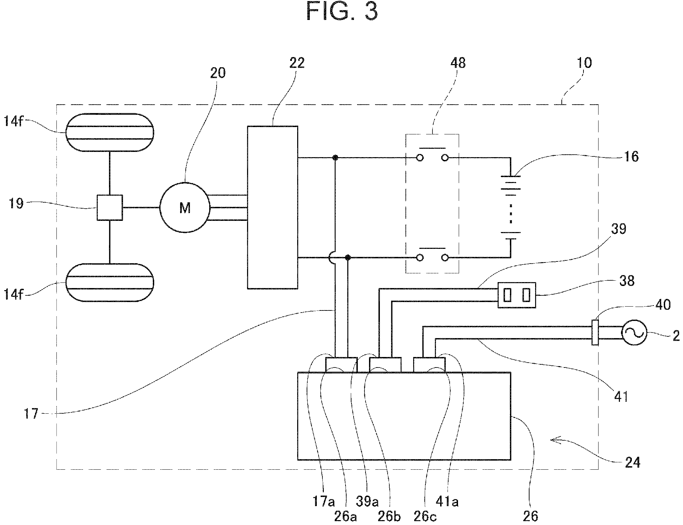

As illustrated in FIG. 1 to FIG. 3, the vehicle 10 includes a vehicle body 12 and a plurality of wheels 14f, 14r. The vehicle body 12 includes, for example, metal such as a steel-based material or an aluminum-based material. The wheels 14f, 14r support the vehicle body 12. The wheels 14f, 14r include the pair of front wheels 14f located at the front of the vehicle body 12 and the pair of rear wheels 14r located at the rear of the vehicle body 12. The pair of respective front wheels 14f is located at the left and right of the vehicle body 12. The pair of respective rear wheels 14r is located at the left and right of the vehicle body 12.

A cabin 12c and a front compartment 12f located in the front direction of the cabin 12c are defined inside the vehicle body 12. The cabin 12c is configured to allow a user to get in the cabin 12c. The vehicle body 12 includes a floor panel 12b and a dash panel 12d. The floor panel 12b defines the floor of the cabin 12c. The dash panel 12d is interposed between the cabin 12c and the front compartment 12f.

The vehicle 10 includes a battery 16, an engine 18, a motor unit 20, a power control unit (PCU) 22, a charging unit 24, a brake unit 42, a charging inlet 40, an electric power supply outlet 38, and a system main relay 48.

The battery 16 is disposed below the floor panel 12b. The battery 16 includes one or more secondary battery cells and is configured to be chargeable and dischargeable. The secondary battery cells are not limited in particular. Each of the secondary battery cells may be, for example, a lithium ion battery cell or a fully solid-state battery cell.

The engine 18 is disposed in the front compartment 12f. The engine 18 is a heat engine that burns fuel to generate motive power and is not limited in particular. The engine 18 includes a gasoline engine, a diesel engine, a hydrogen engine, and the like. The engine 18 is connected to the pair of front wheels 14f through a reducer 19 and an unillustrated power split device. The engine 18 drives the pair of front wheels 14f.

The motor unit 20 is disposed in the front compartment 12f. The motor unit 20 is connected to the battery 16 through the PCU 22. The motor unit 20 is connected to the pair of front wheels 14f through the reducer 19. The motor unit 20 includes a traction motor that uses electric power supplied from the battery 16 to drive the pair of front wheels 14f. The pair of front wheels 14f is not, however, limitative. It is sufficient if the motor unit 20 drives at least one of the wheels 14f, 14r.

The PCU 22 is disposed in the front compartment 12f. The PCU 22 is connected to the battery 16 through the system main relay 48. The PCU 22 is electrically connected to both the battery 16 and the motor unit 20. The PCU 22 includes an inverter, a converter, and the like. The PCU 22 controls supply electric power between the battery 16 and the motor unit 20. For example, in a case where the vehicle 10 accelerates, the PCU 22 controls driving electric power that is supplied from the battery 16 to the motor unit 20. Alternatively, in a case where the vehicle 10 decelerates, the PCU 22 controls regenerated electric power that is supplied from the motor unit 20 to the battery 16. It is to be noted that the PCU 22 is disposed between the motor unit 20 and the charging unit 24. The PCU 22 is disposed on the motor unit 20 and integrated into the motor unit 20.

The charging inlet 40 is configured to allow an external alternating-current electric power supply 2 to be attached and detached to and from the charging inlet 40. The external alternating-current electric power supply 2 is, for example, a commercial electric power supply for home use. The charging inlet 40 receives, from the external alternating-current electric power supply 2, charging electric power with which the battery 16 is charged. The charging inlet 40 according to the present embodiment is connected to the external alternating-current electric power supply 2 through a cable. As another embodiment, the charging inlet 40 may be, however, wirelessly connected to the external alternating-current electric power supply 2.

The electric power supply outlet 38 is disposed in the cabin 12c. The electric power supply outlet 38 is configured to allow an electric device to be attached and detached to and from the electric power supply outlet 38. The electric power supply outlet 38 outputs alternating-current electric power to the electric device. The electric device here includes, for example, a home appliance, a personal computer, a smartphone, a tablet terminal, and the like.

The charging unit 24 is disposed in the front compartment 12f. If described in detail, the charging unit 24 is disposed on the PCU 22 located in the up direction of the motor unit 20. For example, the charging unit 24 may be placed in contact with the upper surface of the PCU 22. The charging unit 24 is electrically connected to the battery 16 through a first cable 17 and the system main relay 48. The first cable 17 includes a first connector 17a. The first connector 17a is configured to be attachable and detachable to and from the charging unit 24. The charging unit 24 is electrically connected to the electric power supply outlet 38 through a second cable 39. The second cable 39 includes a second connector 39a. The second connector 39a is configured to be attachable and detachable to and from the charging unit 24. The charging unit 24 is connected to the charging inlet 40 through a third cable 41. The third cable 41 includes a third connector 41a. The third connector 41a is configured to be attachable and detachable to and from the charging unit 24.

The charging unit 24 includes a casing 26 and a bi-directional charger 28 that is accommodated in the casing 26. The casing 26 includes metal. The metal included in the casing 26 may be, for example, an aluminum-based metal or a steel-based metal. The bi-directional charger 28 is a type of electric power converter. The bi-directional charger 28 is capable of converting alternating-current electric power supplied from the external alternating-current electric power supply 2 to direct-current electric power with which the battery 16 is charged. In addition, the bi-directional charger 28 is capable of converting direct-current electric power supplied from the battery 16 to alternating-current electric power that is supplied to the electric power supply outlet 38. Although described in detail later, the charging unit 24 is electrically connected to the battery 16 not only while the vehicle 10 is being charged, but also while the vehicle 10 is traveling. This allows the bi-directional charger 28 to supply electric power from the battery 16 to the electric power supply outlet 38 even while the vehicle 10 is traveling.

The casing 26 includes a first connector port 26a, a second connector port 26b, and a third connector port 26c. The first connector port 26a is configured to allow the first connector 17a of the first cable 17 to be attached and detached to and from the first connector port 26a. The first connector port 26a is electrically connected to the battery 16 through the first cable 17. The second connector port 26b is configured to allow the second connector 39a of the second cable 39 to be attached and detached to and from the second connector port 26b. The second connector port 26b is electrically connected to the electric power supply outlet 38 through the second cable 39. The third connector port 26c is configured to allow the third connector 41a of the third cable 41 to be attached and detached to and from the third connector port 26c. The third connector port 26c is electrically connected to the charging inlet 40 through the third cable 41. The first connector port 26a, the second connector port 26b, and the third connector port 26c are disposed on the upper surface of the casing 26. The first connector port 26a is located closer to the front side than the second connector port 26b and the third connector port 26c.

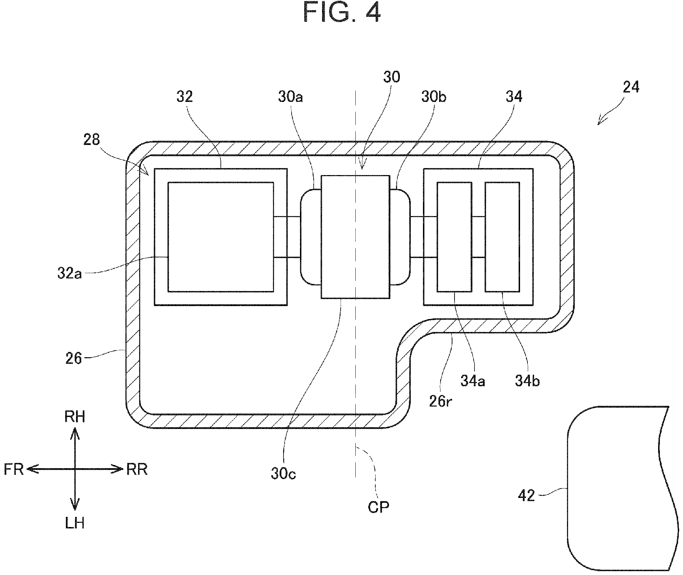

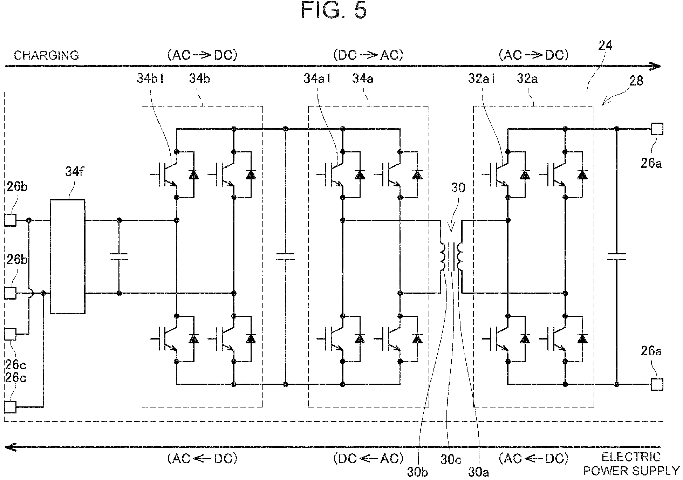

An internal structure of the charging unit 24 will be described with reference to FIG. 4 and FIG. 5. As described above, the charging unit 24 accommodates the bi-directional charger 28 inside the casing 26. The bi-directional charger 28 includes an isolation transformer 30, a first electric circuit 32, and a second electric circuit 34. The isolation transformer 30 is provided between the first electric circuit 32 and the second electric circuit 34 and electrically isolates the first electric circuit 32 and the second electric circuit 34. The isolation transformer 30 includes a primary coil 30a, a secondary coil 30b, and a core 30c. The core 30c includes a magnetic material. The primary coil 30a and the secondary coil 30b are wound around the core 30c. The primary coil 30a and the secondary coil 30b are electrically isolated from each other and magnetically connected to each other through the core 30c.

The first electric circuit 32 is electrically connected to the primary coil 30a. In addition, the first electric circuit 32 is electrically connected to the first connector port 26a. That is, the first electric circuit 32 is interposed between the first connector port 26a and the primary coil 30a of the isolation transformer 30 and electrically connected to the battery 16 through the first cable 17. The first electric circuit 32 includes a first electric power conversion circuit 32a. The first electric power conversion circuit 32a includes a plurality of switching elements 32a1. Freewheeling diodes are connected in parallel to the respective switching elements 32a1.

The second electric circuit 34 is electrically connected to the secondary coil 30b. In addition, the second electric circuit 34 is electrically connected to the second connector port 26b and the third connector port 26c. That is, the second electric circuit 34 is interposed between the second connector port 26b and the secondary coil 30b of the isolation transformer 30 and electrically connected to the electric power supply outlet 38 through the second cable 39. In addition, the second electric circuit 34 is interposed between the third connector port 26c and the secondary coil 30b of the isolation transformer 30 and electrically connected to the charging inlet 40 through the third cable 41.

The second electric circuit 34 includes a second electric power conversion circuit 34a, a third electric power conversion circuit 34b, and a filter circuit 34f. The second electric power conversion circuit 34a is electrically connected to the secondary coil 30b. The third electric power conversion circuit 34b is electrically connected to the second electric power conversion circuit 34a. The third electric power conversion circuit 34b is electrically connected to the second connector port 26b and the third connector port 26c (i.e., the electric power supply outlet 38 and the charging inlet 40) through the filter circuit 34f. As with the first electric power conversion circuit 32a, the second electric power conversion circuit 34a includes a plurality of switching elements 34a1 and the third electric power conversion circuit 34b includes a plurality of switching elements 34b 1.

As described above, the bi-directional charger 28 is capable of converting direct-current electric power supplied from the battery 16 to alternating-current electric power that is supplied to the electric power supply outlet 38 (see a leftward arrow in FIG. 5). In the case, the first electric power conversion circuit 32a converts the direct-current electric power supplied from the battery 16 to high-frequency alternating-current electric power that is input to the primary coil 30a of the isolation transformer 30. When the high-frequency electric power is input to the primary coil 30a, the isolation transformer 30 outputs high-frequency electric power from the secondary coil 30b. The second electric power conversion circuit 34a then converts the high-frequency alternating-current electric power output from the isolation transformer 30 to direct-current electric power. The third electric power conversion circuit 34b then converts the direct-current electric power output from the second electric power conversion circuit 34a to alternating-current electric power that is supplied to the electric power supply outlet 38.

In addition, the bi-directional charger 28 is capable of converting alternating-current electric power supplied from the external alternating-current electric power supply 2 to direct-current electric power with which the battery 16 is charged (see a rightward arrow in FIG. 5). In the case, the third electric power conversion circuit 34b converts the alternating-current electric power supplied from the external alternating-current electric power supply 2 to direct-current electric power. The second electric power conversion circuit 34a then converts the direct-current electric power output from the third electric power conversion circuit 34b to high-frequency alternating-current electric power that is input to the secondary coil 30b of the isolation transformer 30. When the high-frequency electric power is input to the secondary coil 30b, the isolation transformer 30 outputs high-frequency electric power from the primary coil 30a. The first electric power conversion circuit 32a then converts the high-frequency alternating-current electric power output from the isolation transformer 30 to direct-current electric power with which the battery 16 is charged.

The brake unit 42 is disposed in the front compartment 12f. The brake unit 42 is disposed adjacent to the charging unit 24 on the rear side. The brake unit 42 is disposed to be offset to the left side with respect to the charging unit 24. The brake unit 42 includes a hydraulic device 44 including a brake master cylinder and the like. The hydraulic device 44 is mechanically connected to a brake pedal (not illustrated). The hydraulic device 44 generates high pressure in hydraulic oil in the hydraulic device 44 in response to an operation performed on the brake pedal. The hydraulic device 44 includes a housing 46. The housing 46 holds the hydraulic oil in a liquid-tight manner. The high pressure of the hydraulic oil acts on the housing 46 and the housing 46 thus has relatively high rigidity. Although not limited in particular, the housing 46 according to the present embodiment includes metal. The metal included in the housing 46 is, for example, an aluminum-based metal. In a modification example, the metal included in the housing 46 may be a steel-based metal. The side surface of the housing 46 on the right side is provided with a recess 46r in the area close to the charging unit 24. As with the housing 46, the side surface of the casing 26 on the left side is provided with a recess 26r in the area close to the brake unit 42.

In the vehicle 10 according to the present embodiment, the system main relay 48 is closed and the motor unit 20 is electrically connected to the battery 16 when the vehicle 10 travels. When the system main relay 48 is closed, the charging unit 24 is also electrically connected to the battery 16. That is, while the vehicle 10 is traveling, the charging unit 24 is also connected to the battery 16 through the system main relay 48. As a result, a high voltage from the battery 16 is applied to the first electric circuit 32 of the charging unit 24. Meanwhile, the brake unit 42 is disposed adjacent to the charging unit 24 on the rear side. Thus, for example, when the vehicle 10 has a collision, the charging unit 24 and the brake unit 42 come into contact and the casing 26 of the charging unit 24 may be hereby damaged.

In this regard, as illustrated in FIG. 4, in the charging unit 24 according to the present embodiment, the first electric circuit 32 is located closer to the front side than the isolation transformer 30 in the casing 26. That is, the first electric circuit 32 is disposed at a position apart from the brake unit 42 in the casing 26. Thus, even in a case where the contact between the charging unit 24 and the brake unit 42 damages the casing 26 of the charging unit 24, the first electric circuit 32 to which the high voltage from the battery 16 is applied is prevented or restrained from being exposed to the outside of the casing 26.

It is to be noted that the second electric circuit 34 may be possibly exposed to the outside when the casing 26 of the charging unit 24 is damaged. The second electric circuit 34 is, however, isolated from the first electric circuit 32 by the isolation transformer 30. That is, the second electric circuit 34 is isolated from the battery 16 by the isolation transformer 30. The electric circuit electrically connected to the battery 16 is thus prevented from being exposed to the outside of the casing 26 even if the second electric circuit 34 is exposed to the outside of the casing 26.

The brake unit 42 according to the present embodiment includes the housing 46 including metal and has relative high rigidity. The presence of the housing 46 having high rigidity in the brake unit 42 increases the possibility that the casing 26 of the charging unit 24 is damaged when the charging unit 24 and the brake unit 42 come into contact. Adopting the present technology, however, prevents or restrains the first electric circuit 32 to which a high voltage from the battery 16 is applied from being exposed to the outside of the casing 26.

The brake unit 42 according to the present embodiment includes the hydraulic device 44 of the brake system. The housing 46 of the hydraulic device 44 is required to have high rigidity. Thus, if the brake unit 42 includes the housing 46 or another member having high rigidity, the possibility further increases that the casing 26 of the charging unit 24 is damaged when the brake unit 42 and the charging unit 24 come into contact. Adopting the present technology, however, prevents or restrains the first electric circuit 32 to which a high voltage from the battery 16 is applied from being exposed to the outside of the casing 26.

The brake unit 42 according to the present embodiment is disposed to be offset to the left side with respect to the charging unit 24. Accordingly, the side surface of the housing 46 of the brake unit 42 on the right side is provided with the recess 46r in the area close to the charging unit 24. According to such a configuration, it is possible to increase the interval between the charging unit 24 and the brake unit 42. The charging unit 24 and the brake unit 42 are thus prevented or restrained from coming into contact and damage to the casing 26 of the charging unit 24 due to the contact is prevented or restrained. It is to be noted that, although not limited in particular, the charging unit 24 according to the present embodiment is provided with the recess 26r on the side surface of the casing 26 of the charging unit 24 on the left side in the area close to the brake unit 42. According to such a configuration, it is possible to further increase the interval between the charging unit 24 and the brake unit 42.

The vehicle 10 according to the present embodiment is a plug-in hybrid electric vehicle and includes the engine 18 that is disposed in the front compartment 12f. The engine 18 is further present in the front compartment 12f to limit the redundant space of the front compartment 12f. The charging unit 24 and the brake unit 42 may be thus disposed closer to each other. In the case, the charging unit 24 and the brake unit 42 come into contact and the possibility further increases that the casing 26 of the charging unit 24 is damaged. Adopting the present technology, however, restrains the first electric circuit 32 to which a high voltage from the battery 16 is applied from being exposed to the outside of the casing 26. It is to be noted that the present embodiment uses a collision degree that causes the first electric circuit 32 to be exposed to the outside from the casing 26 as an example, but the collision degree is not limited to the example. According to the present technology, it is possible to reduce the influence of a collision on the first electric circuit 32 regardless of the collision degree of the vehicle 10.

In the casing 26 of the charging unit 24 according to the present embodiment, the first connector port 26a is located closer to the front side than the second connector port 26b and the third connector port 26c. According to such a configuration, the first connector 17a is disposed at a position relatively apart from the brake unit 42 in the casing 26. This makes it possible to restrain the first connector 17a electrically connected to the battery 16 from being damaged by the brake unit 42 when the vehicle 10 has a collision.

### CORRESPONDENCE

The charging unit 24 is an example of the "first unit" according to the present technology. It is sufficient if the "first unit" is a unit that incorporates an isolation transformer and is electrically connected to the battery 16 even while the vehicle 10 is traveling. The brake unit 42 is an example of the "second unit" according to the present technology. The rear side in the vehicle front-rear direction is an example of the "first side in the vehicle front-rear direction" according to the present technology and the front side in the vehicle front-rear direction is an example of the "second side in the vehicle front-rear direction" according to the present technology. The left side in the vehicle left-right direction is an example of the "first side in the vehicle left-right direction" according to the present technology and the right side in the vehicle left-right direction is an example of the "second side in the vehicle left-right direction" according to the present technology.

## Claims

1. A vehicle (10) comprising:
a vehicle body (12);
wheels (14f, 14r) that supports the vehicle body (12);
a motor (20) configured to drive at least one of the wheels (14f, 14r);
a battery (16) that is connected to the motor (20) through a system main relay (48);
a first unit (24) that is connected to the battery (16) through the system main relay (48); and
a second unit (42) that is disposed adjacent to the first unit (24) on a first side in a vehicle front-rear direction, wherein:
the first unit (24) includes:
a casing (26);
an isolation transformer (30) that is disposed in the casing (26), the isolation transformer (30) including a primary coil (30a) and a secondary coil (30b);
a first electric circuit (32) that is disposed in the casing (26), the first electric circuit (32) being electrically connected to the primary coil (30a) of the isolation transformer (30), the first electric circuit (32) being electrically connected to the battery (16); and
a second electric circuit (34) that is disposed in the casing (26), the second electric circuit (34) being electrically connected to the secondary coil (30b) of the isolation transformer (30); and
the first electric circuit (32) is located closer to a second side in the vehicle front-rear direction than the isolation transformer (30) in the casing (26).

2. The vehicle (10) according to claim 1, further comprising an electric power supply outlet (38) configured to cause an electric device to be attached and detached to and from the electric power supply outlet (38), the electric power supply outlet (38) being electrically connected to the second electric circuit (34) of the first unit (24), wherein
the isolation transformer (30), the first electric circuit (32), and the second electric circuit (34) in the first unit (24) are included in an electric power converter (28) configured to convert direct-current electric power supplied from the battery (16) to alternating-current electric power that is supplied to the electric power supply outlet (38).

3. The vehicle (10) according to claim 2, wherein:
the first electric circuit (32) includes a first electric power conversion circuit (32a) configured to convert the direct-current electric power supplied from the battery (16) to high-frequency alternating-current electric power that is input to the isolation transformer (30); and
the second electric circuit (34) includes:
a second electric power conversion circuit (34a) configured to convert the high-frequency alternating-current electric power output from the isolation transformer (30) to direct-current electric power; and
a third electric power conversion circuit (34b) configured to convert the direct-current electric power output from the second electric power conversion circuit (34a) to the alternating-current electric power that is supplied to the electric power supply outlet (38).

4. The vehicle (10) according to claim 3, further comprising a charging inlet (40) configured to cause an external alternating-current electric power supply to be attached and detached to and from the charging inlet (40), the charging inlet (40) being electrically connected to the second electric circuit (34) of the first unit (24), wherein
the isolation transformer (30), the first electric circuit (32), and the second electric circuit (34) in the first unit (24) are included in a bi-directional charger (28) configured to convert alternating-current electric power supplied from the external alternating-current electric power supply to direct-current electric power with which the battery (16) is charged.

5. The vehicle (10) according to claim 4, wherein:
the third electric power conversion circuit (34b) of the second electric circuit (34) is configured to convert the alternating-current electric power supplied from the external alternating-current electric power supply to direct-current electric power;
the second electric power conversion circuit (34a) of the second electric circuit (34) is configured to convert the direct-current electric power output from the third electric power conversion circuit (34b) to high-frequency alternating-current electric power that is input to the isolation transformer (30); and
the first electric power conversion circuit (32a) of the first electric circuit (32) is configured to convert the high-frequency alternating-current electric power output from the isolation transformer (30) to the direct-current electric power with which the battery (16) is charged.

6. The vehicle (10) according to claim 5, wherein the second unit (42) includes a housing (46) made of metal.

7. The vehicle (10) according to claim 6, wherein:
the second unit (42) includes a hydraulic device (44) including a brake master cylinder; and
the housing (46) is a part of the hydraulic device (44).

8. The vehicle (10) according to claim 7, wherein:
the second unit (42) is disposed to be offset to a first side in a vehicle left-right direction with respect to the first unit (24); and
a side surface of the housing (46) on a second side in the vehicle left-right direction is provided with a recess (46r) in an area close to the first unit (24).

9. The vehicle (10) according to claim 1, wherein:
the vehicle body (12) includes a cabin (12c) and a front compartment (12f) that is located in a front direction of the cabin (12c); and
the first unit (24) and the second unit (42) are disposed in the front compartment (12f).

10. The vehicle (10) according to claim 9, further comprising a power controller (22) that controls supply electric power between the battery (16) and the motor (20), wherein
the first unit (24) and the second unit (42) are disposed above the power controller (22).

11. The vehicle (10) according to claim 9, further comprising an engine (18) that is disposed in the front compartment (12f), wherein
the vehicle (10) is a plug-in hybrid electric vehicle.

12. The vehicle (10) according to claim 1, wherein:
the casing (26) of the first unit (24) includes a first connector port (26a), a second connector port (26b), and a third connector port (26c);
the first connector port (26a) is configured to cause a first connector (17a) of a first cable to be attached and detached to and from the first connector port (26a), the first cable being electrically connected to the battery (16);
the second connector port (26b) is configured to cause a second connector (39a) of a second cable to be attached and detached to and from the second connector port (26b), the second cable being electrically connected to an electric power supply outlet (38);
the third connector port (26c) is configured to cause a third connector (41a) of a third cable to be attached and detached to and from the third connector port (26c), the third cable being electrically connected to a charging inlet (40); and
the first connector port (26a) is located closer to the second side in the vehicle front-rear direction than the second connector port (26b) and the third connector port (26c).

13. The vehicle (10) according to claim 1, wherein the first electric circuit (32) is located closer to the second side in the vehicle front-rear direction than a central position of the first unit (24) in the vehicle front-rear direction.

14. The vehicle (10) according to claim 1, wherein:
the first side in the vehicle front-rear direction is a rear side in the vehicle front-rear direction; and
the second side in the vehicle front-rear direction is a front side in the vehicle front-rear direction.

15. The vehicle (10) according to claim 1, wherein the second unit (42) includes a housing (46) made of metal.
